# EUROPÄISCHE PATENTANMELDUNG

(11) **EP 1 400 717 A1**
(43) Veröffentlichungstag der Anmeldung: **24.03.2004**
(21) Anmeldenummer: 03016475.0
(22) Anmeldetag: 22.07.2003
(51) Int. Cl.: F16D 23/06

(54) **Synchroneinrichtung**

(30) Priorität: 19.09.2002 DE 20214485 U; 06.11.2002 DE 20217216 U
(71) Anmelder: Schwarzbich, Jörg, 33615 Bielefeld (DE)
(72) Erfinder: Schwarzbich, Jörg, 33615 Bielefeld (DE)
(74) Vertreter: Wiebusch, Manfred

(57) **Zusammenfassung**

Synchroneinrichtung für Schaltgetriebe, mit einem Zahnrad (12), einer Schiebemuffe (14), die über eine Innenverzahnung (16) verschiebbar mit dem Zahnrad (12) in Eingriff steht, und mit zwischen dem Zahnrad (12) und der Schiebemuffe (14) angeordneten Druckstücken (26; 26'; 26"; 26'''), die jeweils ein topfförmiges, in einer axialen Nut (24) des Zahnrads (12) aufgenommenes Gehäuse (32) und eine Feder (34) aufweisen, die sich am Boden (36) des Gehäuses (32) abstützt und ein Druckglied (28) gegen die Innenverzahnung (16) der Schiebemuffe (14) vorspannt, dadurch gekennzeichnet, daß das Gehäuse (32) des Druckstücks (26; 26'; 26"; 26"') sich kippbar auf dem Grund der Nut (24) des Zahnrads (12) abstützt.

## Beschreibung

Die Erfindung betrifft eine Synchroneinrichtung für Schaltgetriebe, mit einem Zahnrad, einer Schiebemuffe, die über eine Innenverzahnung verschiebbar mit dem Zahnrad in Eingriff steht, und mit zwischen dem Zahnrad und der Schiebemuffe angeordneten Druckstücken, die jeweils ein topfförmiges, in einer axialen Nut des Zahnrads aufgenommenes Gehäuse und eine Feder aufweisen, die sich am Boden des Gehäuses abstützt und ein Druckglied gegen die Innenverzahnung der Schiebemuffe vorspannt.

Synchroneinrichtungen dienen in Schaltgetrieben zur Herstellung eines Gleichlaufs zwischen zwei auf einer gemeinsamen Welle sitzenden Zahnrädern, bevor eine Antriebsverbindung zwischen diesen Zahnrädern hergestellt wird. Zu diesem Zweck ist es zwischen dem fest auf der Welle sitzenden Antriebszahnrad und dem drehbar auf der Welle gelagerten Abtriebszahnrad ein Synchronring vorgesehen, der reibschlüssig gegen das Abtriebszahnrad andrückbar ist. Wenn die auf dem Antriebszahnrad sitzende Schiebemuffe in Richtung auf das Abtriebszahnrad verschoben wird, läuft ihre Innenverzahnung zunächst auf angeschrägte Zähne des Synchronrings auf, so daß der Synchronring mit seiner Reibfläche gegen das Abtriebszahnrad gedrückt wird. Solange die Drehzahlen von Antriebs- und Abtriebszahnrad noch nicht übereinstimmen, verhindert das durch den Reibschluß auf den Synchronring ausgeübte Drehmoment ein Weiterschieben der Schiebemuffe. Erst bei Drehzahlgleichheit läßt sich der Synchronring relativ zur Schiebemuffe in eine Position verdrehen, in der die Schiebemuffe auf eine Außenverzahnung des Abtriebszahnrads aufgeschoben werden kann, so daß das Abtriebszahnrad drehfest mit dem Antriebszahnrad gekoppelt wird. Die zwischen dem Antriebszahnrad und der Schiebemuffe angeordneten Druckstükke beseitigen das Spiel zwischen dem Antriebszahnrad und der Schiebemuffe und tragen so zur Geräusch- und Verschleißminderung bei.

In DE 195 80 558 C1 wird eine Synchroneinrichtung dieser Art beschrieben, bei der die zur Aufnahme der Druckstücke dienenden axialen Nuten ein T-förmiges Profil haben. Die Gehäuse der Druckstücke haben eine zu diesem Profil komplementäre Form und stützen sich in der Nähe des mit dem Druckglied versehenen Endes auf den Schultern der T-förmigen Nut ab. Auf diese Weise sind die Druckstücke verschiebbar in den Nuten geführt. Die Druckglieder werden durch die Federn in Vertiefungen in der Innenverzahnung des Antriebszahnrads vorgespannt. Wenn die Schiebemuffe verschoben wird, werden die Druckstücke zunächst als Ganzes ein Stück weit mitgenommen, bis sie an den Synchronring anstoßen. Erst dann werden die Druckglieder entgegen der Kraft der Feder zurückgedrückt, so daß sich die Schiebemuffe unter Überwindung eines gewissen Rastwiderstands weiter verschieben läßt. Die Herstellung der T-förmig profilierten Nuten ist jedoch relativ aufwendig. Außerdem wird für die Unterbringung der Druckstücke relativ viel Platz beansprucht, und durch die an den radial äußeren Enden verbreiterten Nuten wird die Außenverzahnung des Zahnrads auf relativ großer Umfangslänge unterbrochen. Weiterhin kommt es beim Verschieben der Druckstücke zu Reibung und Verschleiß, weil die verbreiterten Köpfe der Gehäuse durch die Federn mit hoher Kraft gegen die Schultern der T-Nuten angedrückt werden.

Aufgabe der Erfindung ist es deshalb, eine Synchroneinrichtung zu schaffen, die sich einfacher herstellen läßt, eine kompakte Bauweise der Synchroneinrichtung erlaubt und eine leichtgängige Bewegung der Schiebemuffe ermöglicht.

Diese Aufgabe wird erfindungsgemäß dadurch gelöst, daß das Gehäuse des Druckstücks sich kippbar auf dem Grund der Nut des Zahnrads abstützt.

Beim Bewegen der Schiebemuffe werden somit die Gehäuse der Druckstücke nicht als Ganzes relativ zum Zahnrad verschoben, sondern lediglich etwas um ihre radial inneren Enden verschwenkt, so daß sie die Bewegung der Schiebemuffe nicht behindern. Zugleich erlaubt es diese Bauweise, die Nuten im Zahnrad schmaler und mit einem einfachen Rechteckprofil auszubilden. Dementsprechend können auch die Gehäuse der Druckstücke eine einfachere Form und kleinere Abmessungen in Umfangsrichtung des Zahnrads aufweisen.

Vorteilhafte Ausgestaltungen der Erfindung sind an den Unteransprüchen angegeben.

Das Gehäuse des Druckstücks ist bevorzugt aus Kunststoff hergestellt und bildet an dem Ende, das das Druckglied, beispielsweise eine Rastkugel, aufnimmt, einen Anschlag, der die Rastkugel gegen Herausfallen sichert. Der Boden des Gehäuses ist vorzugsweise leicht gerundet, so daß er bei der Kippbewegung auf dem Grund der Nut des Zahnrads abrollen kann.

Das Gehäuse des Druckstücks kann die Form einer quadratischen Säule aufweisen, kann jedoch wahlweise am radial äußeren Ende auch etwas in Axialrichtung des Zahnrads verdickt sein. Bei dem Gehäuse in der Form einer quadratischen Säule kann der Boden sphärisch gerundet sein, so daß sich das Gehäuse wahlweise in 90° gegeneinander verdrehten Positionen in die Nut des Zahnrades einsetzen läßt. Auf diese Weise werden Fehler beim Bestücken des Zahnrads mit den Drucktücken vermieden.

Bevorzugt weist das Gehäuse an seinem radial äußeren Ende Fortsätze auf, die in die Zahnzwischenräume der Innenverzahnung der Schiebemuffe eingreifen. In diesem Fall kann die Schiebemuffe selbst bei einem Bruch der Feder des Druckstücks oder bei fehlendem oder klemmendem Rastkörper noch durch die Fortsätze des Gehäuses abstützt werden, so daß selbst in diesem Fall noch ein Verzahnungsklappern zwischen der Schiebemuffe und dem Zahnrad vermieden werden kann.

Im folgenden werden Ausführungsbeispiele der Erfindung anhand der Zeichnung näher erläutert.

Es zeigen:
- Figur 1: einen Schnitt durch eine Synchroneinrichtung in der Neutralstellung;
- Figur 2: eine Ansicht einer Schiebemuffe auf einem im Schnitt dargestellten, mit Druckstücken versehenen Zahnrad;
- Figur 3: eine vergrößerte Schnittdarstellung des Druckstücks aus Figur 2;
- Figur 4: eine Seitenabsicht des Druckstücks;
- Figur 5: einen Schnitt längs der Linie V - V in Figur 4;
- Figur 6: das Druckstück in der Draufsicht;
- Figuren 7 bis 9: eine Seitenansicht, einen Längsschnitt und eine Draufsicht eines Druckstücks gemäß einer anderen Ausführungsform;
- Figuren 10 und 11: Schnittdarstellungen analog zu Figur 1 für unterschiedliche Stellungen der Synchroneinrichtung; und
- Figuren 12 und 13: Längsschnitte zweier Druckstücke gemäß zweier weiteren Ausführungsformen.

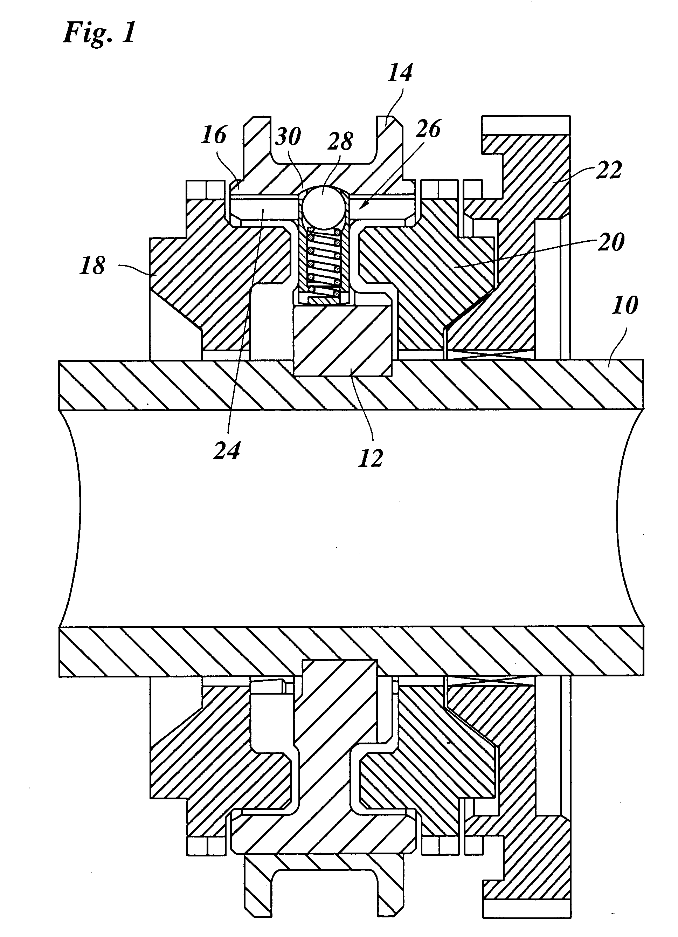

In Figur 1 ist ein drehfest auf einer Welle 10 sitzendes Zahnrad 12 gezeigt, auf dem eine Schiebemuffe 14 angeordnet ist. Die Schiebemuffe greift mit einer Innenverzahnung 16 in die Verzahnung des Zahnrads 12 ein und ist in Axialrichtung der Welle 10 auf dem Zahnrad verschiebbar.

Auf beiden Seiten des Zahnrads 12 sind Synchronringe 18, 20 angeordnet, die sich mit dem Zahnrad 12 und der Schiebemuffe 16 mitdrehen, jedoch relativ zu dem Zahnrad 12 innerhalb eines begrenzten Winkelbereichs verdrehbar sind. Auf der dem Zahnrad entgegengesetzten Seite des Synchronrings 20 ist ein Zahnrad 22 gezeigt, das drehbar auf der Welle 10 gelagert ist und durch die Schiebemufffe 14 drehfest an das Zahnrad 12 gekoppelt werden kann. Auf der vom Zahnrad 12 abgewandten Seite des anderen Synchronrings 18 ist ein nicht gezeigtes weiteres Zahnrad mit anderem Durchmesser angeordnet. Durch Verstellen der Schiebemuffe 14 in der einen oder anderen Richtung kann somit über die Welle 10 entweder das Zahnrad 22 oder das nicht gezeigte weitere Zahnrad angetrieben werden, so daß sich in dem Getriebe unterschiedliche Übersetzungsverhältnisse einstellen lassen.

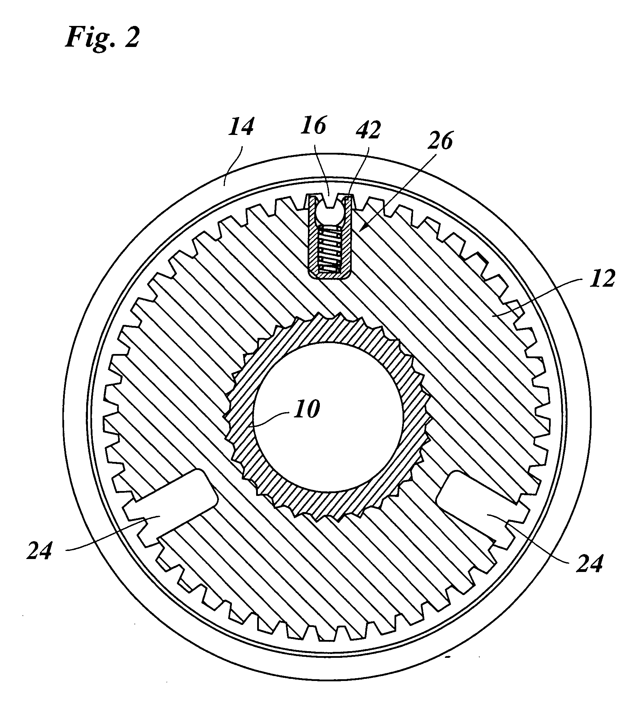

Wie in Figur 2 zu erkennen ist, weist das Zahnrad 12 in seiner äußeren Umfangsfläche drei in Axialrichtung durchgehende, in Winkelabständen von 120° angeordnete Nuten 24 auf, die einen rechteckigen, in Radialrichtung langgestreckten Querschnitt haben und die Außenverzahnung des Zahnrads 12 jeweils an der Stelle eines einzelnen Zahns unterbrechen. In die Nuten 24 sind Druckstücke 26 eingesetzt, von denen in Figur 2 nur eines dargestellt ist. In Figur 1 geht die Schnittebene durch die obere Nut 24, in die das Druckstück 26 eingesetzt ist. Das Druckstück 26 weist einen kugelförmiges Druckglied auf das im folgenden als Rastkugel 28 bezeichnet ist und das elastisch radial nach außen vorgespannt ist, und, wie Figur 1 zeigt, in eine flache, muldenartige Vertiefung 30 eingreift, die in einem der Zähne der Schiebemuffe 14 ausgebildet ist.

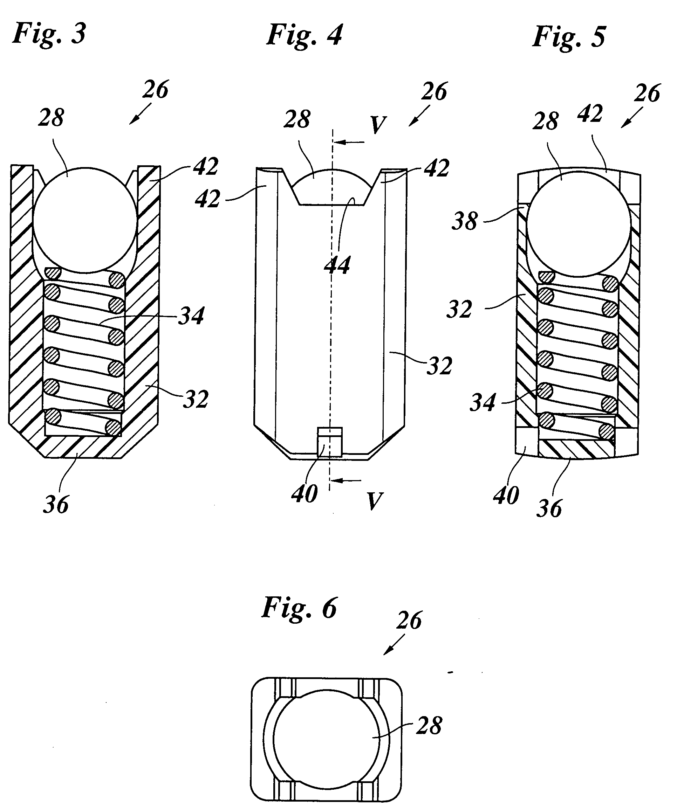

Das Druckstück 26 ist in Figuren 3 bis 6 deutlicher dargestellt. Es weist ein durch ein Kunststoff-Formteil gebildetes topfförmiges Gehäuse 32 auf, das die Form einer rechteckigen, annähernd quadratischen Säule hat. In der Schnittdarstellung gemäß Figur 3 und der Ansicht gemäß Figur 4 hat das Gehäuse 32 eine Breite, die mit der Breite der Nuten 24 übereinstimmt. In der dazu senkrechten Richtung (Schnittdarstellung gemäß Figur 5) ist die Breite des Gehäuses etwas kleiner. Im Inneren des Gehäuses ist ein zylindrischer Schacht ausgebildet, der eine Feder 34 aufnimmt. Die Feder 34 stützt sich am Boden 36 des Gehäuses 32 ab und spannt die Rastkugel 28 nach oben gegen die Schiebemuffe vor. Die Rastkugel 28 ist verschiebbar in einem erweiterten oberen Teil des Schachtes aufgenommen, wird jedoch durch leichte Kröpfungen 38 an den etwas dünneren, in Figur 5 geschnitten dargestellten Wänden des Gehäuses 32 unverlierbar in dem Gehäuse gehalten. Bei der Montage kann somit die Rastkugel 28 in das Gehäuse 32 eingeclipst werden, so daß das Druckstück dann als eine vormontierte Einheit in das Zahnrad 12 eingesetzt werden kann. Im Bereich des Bodens 36 des Gehäuses sind Ablauföffnungen 40 (Figur 5) für Getriebeöl vorgesehen.

Wie weiterhin in Figur 5 zu erkennen ist, ist der Boden 36 des Gehäuses 32 an der Unterseite leicht verrundet.

Die in Figur 3 geschnitten dargestellten Wände des Gehäuses 32 bilden Vorsprünge 42, die über die Kröpfungen 38 hinaus vorspringen und so eine Aussparung 44 (Figur 4) begrenzen, in die der mit der Vertiefung 30 versehene Zahn der Schiebemuffe 14 eingreifen kann.

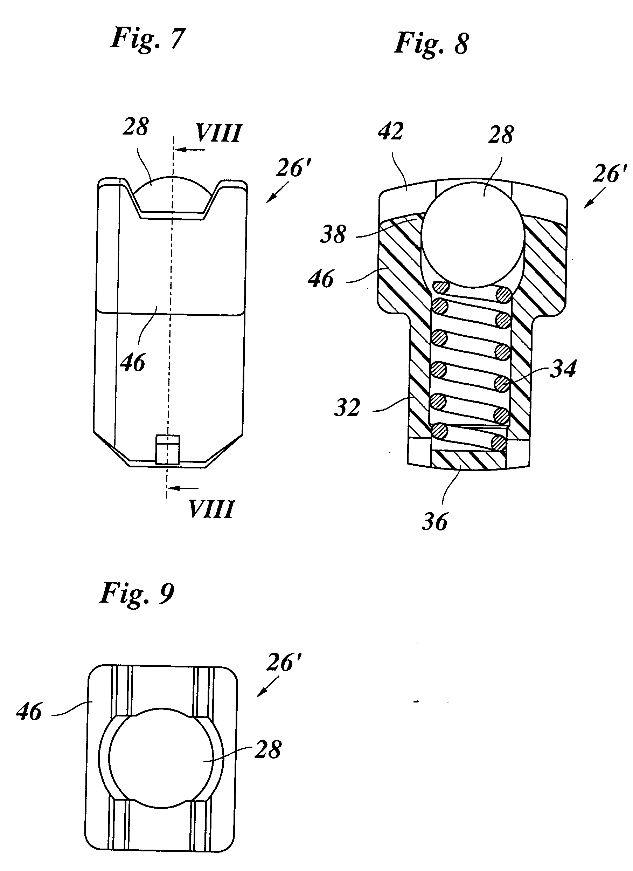

Figuren 7 bis 9 zeigen ein Druckstück 26', das sich von dem zuvor beschriebenen Druckstück 26 dadurch unterscheidet, daß das Gehäuse 32 am radial äußβeren (in Figuren 7 bis 8 oberen) Ende einen verdickten Kopf 46 mit einem länglicheren rechteckigen Grundriß aufweist, der sich in Richtung der axialen Nut 24 erstreckt. Auf diese Weise wird eine bessere Führung des Gehäuses 32 in der Nut 24 und zugleich eine größere Steifheit der Kröpfungen 38 erreicht.

Bei beiden Druckstücken 26, 26' sind die Vorsprünge 42 an der Oberseite verrundet, wie in Figuren 5 und 8 zu erkennen ist. Die Rundung entspricht einem Kreisbogen, der konzentrisch zum unteren Scheitel der Rundung des Bodens 36 ist.

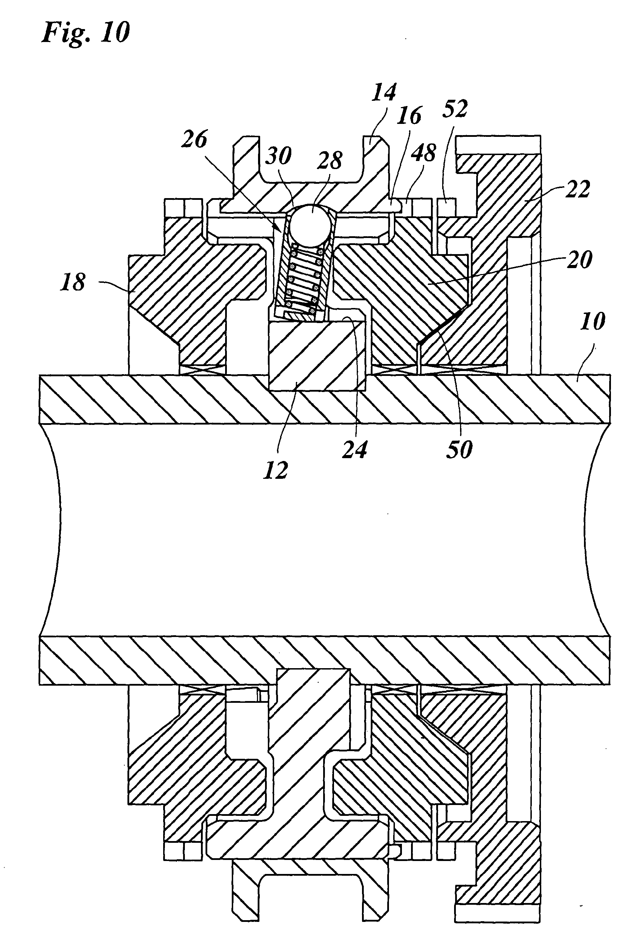

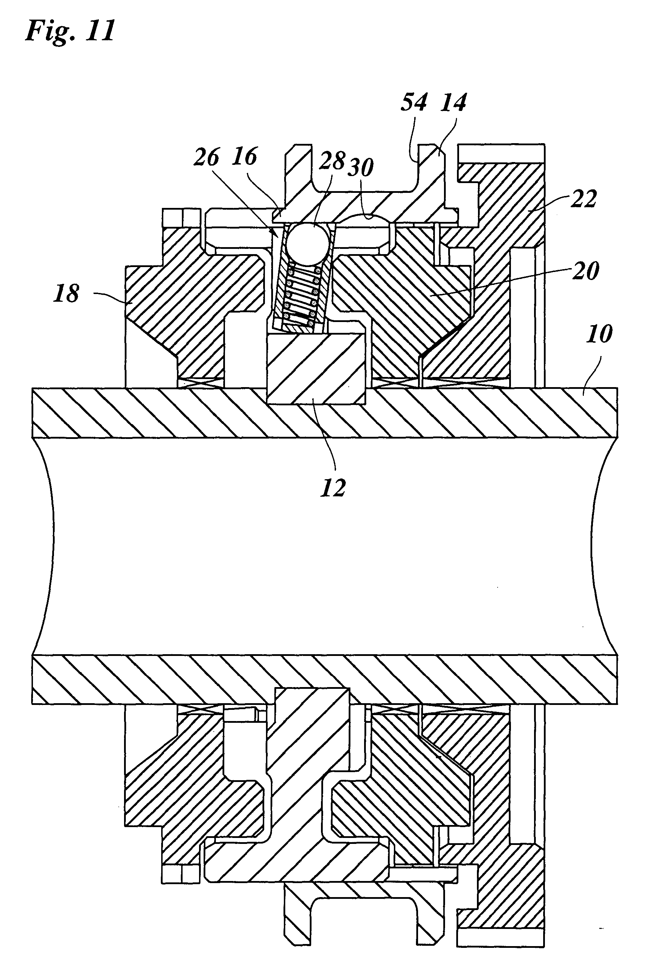

Die Wirkungsweise der Sychroneinrichtung soll nun anhand der Figuren 10 und 11 erläutert werden.

In Figur 10 ist die Schiebemuffe 14 im Vergleich zu Figur 1 etwas nach rechts verschoben worden, so daß die Innenverzahnung 16 auf Zahnschrägen einer Außenverzahnung 48 des Synchronrings 20 aufläuft. Bei dieser Bewegung der Schiebemuffe 14 ist das Druckstück 26, um sein unteres Ende, das sich auf dem Grund der Nut 24 abstützt, gekippt worden. Diese Kippbewegung wird durch die Rundung des Bodens 36 des Gehäuses 32 erleichtert. Aufgrund der Kippbewegung bleibt die Rastkugel 28 mit der Vertiefung 30 der Schiebemuffe in Eingriff. In dem in Figur 10 gezeigten Zustand wird die Kippbewegung des Druckstücks 26 dadurch begrenzt, daß das Gehäuse 32 am Synchronring 20 anstößt.

Bei der Bewegung der Schiebemuffe 14 zwischen den in Figuren 1 und 10 gezeigten Positionen braucht somit kein Reibungswiderstand überwunden zu werden, da die Druckstücke 26 gleichsam als Gelenke wirken, die die Relativbewegung zwischen Zahnrad 12 und Schiebemuffe 14 zulassen und dabei stets für Spielfreiheit sorgen.

Der Synchronring 20 ist in dem in Figur 10 gezeigten Zustand mit einer konischen Reibfläche auf einen Außenkonus 50 des Zahnrads 22 geschoben worden, so daß das Zahnrad 22 durch Reibschluß auf die Drehzahl der Einheit aus Zahnrad 12, Schiebemuffe 14 und Synchronring 20 beschleunigt oder verzögert wird. Solange noch keine Drehzahlübereinstimmung erreicht ist, setzen die Zahnschrägen der Außenverzahnung 48 des Synchronrings 20, der dann noch einem hohen Drehmoment unterliegt, der Bewegung der Schiebemuffe 14 einen solchen Widerstand entgegen, daß die Innenverzahnung 16 noch nicht mit einer Außenverzahnung 52 des Zahnrads 22 in Eingriff gebracht werden kann. Erst nach Angleichung der Drehzahlen kann die Schiebemuffe 14 weiter in die in Figur 11 gezeigte Position verschoben werden, in der sie eine drehfeste Verbindung zwischen den Zahnrädern 12 und 22 herstellt. Da die Rastkugel 28 an dieser weiteren Bewegung der Schiebemuffe 14 nicht mehr teilnehmen kann, wird sie entgegen der Kraft der Feder 34 aus der Vertiefung 30 der Schiebemuffe herausgedrückt. Beim Kuppeln des Zahnrads 22 mit dem Zahnrad 12 ist deshalb ein durch die Druckstücke 26 bewirkter Rastwiderstand zu überwinden.

Im übrigen wird die Bewegung der Schiebemuffe 14 durch eine nicht gezeigte Schaltgabel gesteuert, die in die Nut 54 am äußeren Umfang der Schiebemuffe eingereift. Durch diese Schaltgabel wird die Schiebemuffe auch in den in Figuren 1 und 11 gezeigten Positionen gehalten.

Durch die Rundung der Vorsprünge 42 des Gehäuses 32 des Druckstücks 26 und insbesondere des Druckstücks 26' ist sichergestellt, daß das Gehäuse bei den Kippbewegungen nicht an der Innenverzahnung 16 der Schiebemuffe anstößt, so daß ausschließlich die Rastkugel 28 mit der Schiebemuffe in Berührung tritt. Wie in Figur 2 gezeigt ist, ragen jedoch andererseits die Vorsprünge 42 so weit in die Zahnzwischenräume der Innenverzahnung 16, daß das Gehäuse 32 des Druckstücks 26 auch unabhängig von der Rastkugel 28 als Abstandshalter zwischen dem Zahnrad 12 und der Schiebemuffe 14 wirken kann und so bei gebrochener oder zu schwacher Feder 34 ein Verzahnungsklappern verhindert.

In einer nicht gezeigten, modifizierten Ausführungsform des Druckstücks 26 kann der Grundriß des Gehäuses 32 auch exakt quadratisch sein, und in den Gehäusewänden, die die Vorsprünge 42 bilden, können Ausnehmungen analog zu den Ausnehmungen 44 vorgesehen sein. In diesem Fall ist das Druckstück 26 an seinem Boden 36 sphärisch verrundet und weist insgesamt eine 90°-Symmetrie bezüglich seiner Längsachse auf, so daß es in beliebigen Positionen in die Nut 24 eingesetzt werden kann.

Da die Nuten 24 des Zahnrads in Axialrichtung durchgehen, lassen sich die Druckstücke 26, 26' einfach montieren. Obgleich die Nuten 24 an beiden Enden offen sind, können die Druckstücke nicht herausfallen, weil sie durch die Synchronringe 18, 20 in ihrer Lage gesichert werden.

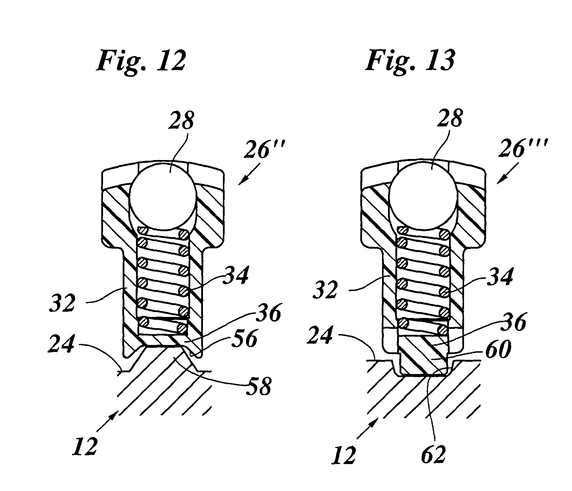

Figuren 12 und 13 zeigen Druckstücke 26" und 26"', die sich von den Druckstücken 26, 26' dadurch unterscheiden, daß sie an ihrem Boden 36 gegen ein Verrutschen in der Nut 24 des Zahnrades 12 gesichert sind. Das Druckstück 26" weist eine Vertiefung 56 auf, in die eine vom Boden der Nut 24 aufragende Nase 58 eingreift. Das Druckstück 26"' weist eine Nase 60 auf, die in eine Vertiefung 62 am Boden der Nut 24 des Zahnrades 12 eingreift. Die Nasen 58, 60 und Vertiefungen 56, 62 sind so an einander angepaßt, daß sie ein Kippen des Druckstücks in der Zeichnungsebene in Figur 12 bzw. 13 erlauben.

## Patentansprüche

1. Synchroneinrichtung für Schaltgetriebe, mit einem Zahnrad (12), einer Schiebemuffe (14), die über eine Innenverzahnung (16) verschiebbar mit dem Zahnrad (12) in Eingriff steht, und mit zwischen dem Zahnrad (12) und der Schiebemuffe (14) angeordneten Druckstücken (26; 26'; 26"; 26"'), die jeweils ein topfförmiges, in einer axialen Nut (24) des Zahnrads (12) aufgenommenes Gehäuse (32) und eine Feder (34) aufweisen, die sich am Boden (36) des Gehäuses (32) abstützt und ein Druckglied (28) gegen die Innenverzahnung (16) der Schiebemuffe (14) vorspannt, **dadurch gekennzeichnet, daß** das Gehäuse (32) des Druckstücks (26; 26'; 26"; 26"') sich kippbar auf dem Grund der Nut (24) des Zahnrads (12) abstützt.

2. Synchroneinrichtung nach Anspruch 1, **dadurch gekennzeichnet, daß** das Druckglied (28) ein Rastkörper ist, der in eine Vertiefung (30) der Innenverzahnung (16) der Schiebemuffe (14) eingreift.

3. Synchroneinrichtung nach Anspruch 1 oder 2, **dadurch gekennzeichnet, daß** das Gehäuse (32) des Druckstücks (26; 26') ein Formkörper aus Kunststoff ist.

4. Synchroneinrichtung nach einem der vorstehenden Ansprüche, **dadurch gekennzeichnet, daß** das Druckglied (28) durch an den Wänden des Gehäuses (32) ausgebildete Kröpfungen (38) unverlierbar in dem Gehäuse gehalten ist.

5. Synchroneinrichtung nach einem der vorstehenden Ansprüche, **dadurch gekennzeichnet, daß** der Boden (36) des Gehäuses (32) verrundet ist.

6. Synchroneinrichtung nach einem der vorstehenden Ansprüche, **dadurch gekennzeichnet, daß** das Gehäuse (32) am radial äußeren Ende Vorsprünge (42) bildet, die in die Zahnzwischenräume der Innenverzahnung (16) der Schiebemuffe (14) ragen.

7. Synchroneinrichtung nach Anspruch 6, **dadurch gekennzeichnet, daß** die Vorsprünge (42) am freien Ende verrundet sind, wobei die Rundung einem auf das radial innere Ende des Druckstücks (26; 26') zentrierten Kreisbogen entspricht.

8. Synchroneinrichtung nach einem der vorstehenden Ansprüche, **dadurch gekennzeichnet, daß** das Gehäuse (32) des Druckstücks (26) die Form einer quadratischen oder rechteckigen Säule hat.

9. Synchroneinrichtung nach Anspruch 8, **dadurch gekennzeichnet, daß** das Druckstück (26) eine 90°-Symmetrie bezüglich seiner Längsachse aufweist.

10. Synchroneinrichtung nach einem der Ansprüche 1 bis 7, **dadurch gekennzeichnet, daß** das Gehäuse (32) des Druckstücks (26') am radial äußeren Ende einen verdickten Kopf (46) mit rechteckigem Grundriß aufweist, der sich in Längsrichtung der Nut (24) erstreckt.

11. Synchroneinrichtung nach einem der Ansprüche 1 bis 10, **dadurch gekennzeichnet, daß** der Boden des Gehäuses (32) des Druckstücks (26"; 26"') und der Grund der Nut (24) über Eingriffskonturen (56, 58; 60, 62) formschlüssig miteinander in Eingriff stehen.

12. Synchroneinrichtung nach Anspruch 11, **dadurch gekennzeichnet, daß** das Gehäuse (32) des Druckstücks (26") am Boden eine Vertiefung (56) aufweist, in die eine auf dem Boden der Nut (24) ausgebildete Nase (58) eingreift.

13. Synchroneinrichtung nach Anspruch 11, **dadurch gekennzeichnet, daß** das Gehäuse (32) des Druckstücks (26") am Boden eine Nase (60) aufweist, die in eine Vertiefung (62) im Boden der Nut (24) eingreift.
